# EUROPEAN PATENT APPLICATION

(11) **EP 1 975 751 A1**
(43) Date of publication of application: **01.10.2008**
(21) Application number: 07105408.4
(22) Date of filing: 30.03.2007
(51) Int. Cl.: G05B 19/042

(54) **Data transfer of data for analysis and evaluation**

(71) Applicant: ABB Research Ltd., 8050 Zürich (CH)
(72) Inventor: Skourup, Charlotte, 3021 Drammen (NO); Kestila, Juha, 00760 Helsinki (FI); Breen, Siri, 8050 Zürich (CH)
(74) Representative: Dahlstrand, Björn

(57) **Abstract**

A method and system for investigation, analysis or modeling of a condition of a drive or machine controller, wherein operating data of said drive or machine controller is examined and a computer-implemented process or calculation carried out to determine said condition by means of identifying one said drive or machine controller of a plurality of drives or machine controllers, accessing and retrieving operating data from said drive or machine controller by means of a portable device comprising a memory storage device, uploading the retrieved operating data to a computer or computer network from the portable device, retrieving, by means of the computer or computer network, stored data for the identified said drive or machine controller and determining the said condition of said drive or machine controller.

## Description

### TECHNICAL FIELD.

The invention concerns method and system for investigating a condition of an industrial device. In particular the invention is provides a method and system to carry out extensive analysis of technical information and condition provided by an industrial device controlled by a drive or machine controller.

### TECHNICAL BACKGROUND

In the context of operations in an industrial plant a commissioning engineer normally installs and configures a new device, such as an electrical drive controller for an electric motor, hereafter summarily called a drive, using the front panel or another HMI, Human machine interface, of the drive. However, the drive provides various types of information for an operation such as configuration including parameter setting, wizards / assistants, error messages and timer functions. Typically the display of industrial devices such as a drive is however rather small and the amount of information that can be presented and /or manipulated is limited or relatively little.

Engineers and operators often require additional information when they interact with the drives or similar process control equipment. Today, they have to search for such information other places, for example, in paper-based manuals and PC-based systems such as a diagnostic tool. It is inconvenient and time-consuming to move away from the drive to another location trying to remember information presented by the drive front panel describing the 'problem'. It may take a relatively long time before a problem is understood or solved. A consequence may be that the engineer forgets significant information and/or interprets information on his own without access to stored information instead of investigating or analysing the information available from the drive.

When a drive is installed and configured, it often requires little interaction from engineers, operators or other groups. Infrequently, the drive requires to be reconfigured due to changed conditions. From time to time the engineer may also receive error messages and other status information the meaning of which are not obvious from the information available at the small HMI front panel. In those cases, he has to write down the error message, or otherwise remember the situation, and move away to operate a PC which often will be placed in an office. There exist different PC tools for support such as diagnostic tools and electronic manuals. With the extended capacity, display size and number of available applications running on a workstation or PC, the engineer can explore the problem and find a solution. Alternatively, the engineer has to search through paper-based manuals and other documentation which may be located at another place.

### SUMMARY OF THE INVENTION

According to one or more embodiments of the present invention an improvement is provided in the form of a method for uploading information from a drive or machine controller including a description of the current situation or state with limited computing and/or display capabilities for transfer to a workstation or central PC with network connection for further investigation or analysis or modeling.

According to a first aspect of the invention an improved method is described for investigation of a condition of a drive or machine controller wherein operating data of said drive or machine controller is examined and a computer-implemented process or calculation carried out to determine said condition by means of identifying one said drive or machine controller of a plurality of drives or machine controllers, accessing and retrieving operating data from said drive or machine controller by means of a portable device comprising a memory storage device, uploading the retrieved operating data to a computer or computer network from the portable device, retrieving, by means of the computer or computer network, stored data for the identified said drive or machine controller and determining the said condition of said drive or machine controller.

According to an embodiment of the invention, a method is described for investigation of a condition of a drive or machine controller wherein operating data of said drive or machine controller is examined and a computer-implemented process or calculation carried out to determine said condition by means of identifying one said drive or machine controller of a plurality of drives or machine controller and by further comprising retrieving operating data from the identified said drive or machine controller from a current operation or latest data update for investigation or analysis.

According to another embodiment of the invention, a method is described for investigation of a condition of a drive or machine controller wherein operating data of said drive or machine controller is examined and a computer-implemented process or calculation carried out to determine said condition by means of identifying one said drive or machine controller of a plurality of drives or machine controller and by further comprising providing both the operating data and stored data to at least one operator or other user.

According to another embodiment of the invention, a method is described for investigation of a condition of a drive or machine controller wherein operating data of said drive or machine controller is examined and a computer-implemented process or calculation carried out to determine said condition by means of identifying one said drive or machine controller of a plurality of drives or machine controller and by further comprising retrieving stored data for the identified said control device comprising technical specifications or historical operating data and/or retrieving stored data for a process section including the, or connected to the identified said drive or machine controller.

According to another embodiment of the invention, a method is described for investigation of a condition of a drive or machine controller wherein operating data of said drive or machine controller is examined and a computer-implemented process or calculation carried out to determine said condition by means of identifying one said drive or machine controller of a plurality of drives or machine controller and by further comprising matching the retrieved operating data to a said condition comprised in the stored data.

The principle focus of this invention is to take a 'picture' or a 'snapshot' of the status of the current situation of the drive (or similar industrial device or equipment) equivalent to taking a picture with a camera and transfer it to a computer medium with extended possibilities for further exploration. An example of a 'picture' is an error message represented as 'Error 540'. In addition to the error message, the state of selected parameters such as speed, frequency / rpm - revolutions per minute, power and time makes up the 'picture'. The user brings this 'picture' to a PC connected to the network. At this PC, the user can further explore this error message. He will have access to the electronically stored user manual where the various error messages are explained in more detail. He may also be interested in viewing previous somewhat similar situations which he can search for either in historical trends based on the state of the parameters, or in maintenance reports based on the error message itself. The invention describes:
- recording a copy of data from the drive
- information transfer from a local drive, or similar machine controller, to a workstation or centralized PC-based system,
- a data transfer device comprising a memory storage device for transferring information
- communication between the drive and the transfer medium and between the transfer medium and the PC-based system

According to another aspect of the invention an improved system is described for investigation of a condition of a drive or machine controller wherein operating data of said drive or controlled machine is examined and computer implemented processes or calculations carried out to determine said condition, which system further comprises an identity device or identity sign for identifying said drive or machine controller comprising any from the group of: tag, RFID tag, a known position or location, machine-readable code, bar-code; a portable device with memory storage means memory stick, Bluetooth phone, PDA, portable device with memory and camera or mobile phone, Tablet PC, handheld terminal, for accessing and retrieving data from said control device, and a computer or computer network means for retrieving by stored data for the identified said control device and providing the operating data and stored data to at least one operator or other user.

The essence of this improvement is an efficient method to upload information from a drive controller with limited display and processing capability (small screen, few interaction buttons, no or limited computer capacity, no network connection, etc.) to a computer system where the system state can be explored and analysed in more detail. A reason for this may, for example, be to understand and/or solve a problem, to optimize parameters and to 'interpret' error or status messages. Another reason is that a drive configuration may require re-configuring to suit changed conditions.

A system to support the requirements of the method comprises:
- a transfer device for transferring a 'snapshot' of the current state or situation, for example, a mobile phone, a USB memory stick, a PDA/ a palmtop, a tablet PC, a handheld terminal, etc.,
- communication link between the transfer medium and the drives (or similar equipment) and a communication link between the transfer medium and the PC-based system,
- a remote computer connected to a network with eg internet access.

The primary advantage of the method is the ability to simply and efficiently investigate a status of a machine. The method may be likened to taking a 'snapshot' or picture of the status of the drive at the present moment, like using a camera and making a snapshot record. This record, this snapshot data provides support to an operator or an engineer to 'remember' the status of the drive when the user has moved away from the drive within a process and moved to a workstation or support PC system, often located in an office.

The method is simple and easy to employ. The transfer of information which may subsequently be loaded onto a PC may be carried out by an information upload using a simple procedure. The equipment used includes existing and commonly available components such as a mobile phone, PDA or USB memory stick.

Communication from the drive to the information transfer device and further to the PC may be based on known and recognized technical solutions, together with improved communication applications. Extended opportunities are provided for information analysis, simulation or modeling at PC-based system which may be supported by including a large display, support applications, electronic manuals, historical data, internet connection for data retrieval and so on. Support system to extract relevant status information for the specific situation (for example categorized as error, configuration, wizard, etc.)

In a preferred embodiment of the methods of the invention one or more methods may be carried out by a computing device comprising one or more microprocessor units or computers. The control unit(s) comprises memory means for storing one or more computer programs for carrying out the improved methods. Preferably such computer program contains instructions for the processor to perform the method as mentioned above and described in more detail below.

### BRIEF DESCRIPTION OF THE DRAWINGS

Embodiments of the invention will now be described, by way of example only, with particular reference to the accompanying drawings in which:
FIGURE 1 is a schematic diagram of a method for transferring data from a drive or device controller to a computer system according to an embodiment of the invention,
FIGURE 2 is a schematic diagram showing a communication architecture between a drive or machine controller and a transfer medium according to an embodiment of the invention,
FIGURE 3 is a schematic diagram showing information transfer from a transfer medium to a computer.
FIGURE 4 is a flowchart showing a method for transferring data from a drive or machine controller to a transfer device, according to an embodiment of the invention, and FIGURE 5 is a flowchart for transferring data from a transfer device to a workstation or networked computer according to an embodiment of the invention.

### DETAILED DESCRIPTION OF THE EMBODIMENTS

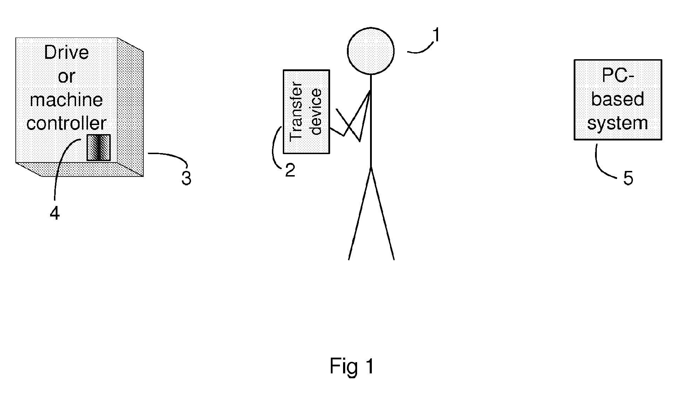

Figure 1 shows in schematic form a method for transferring data from a drive or machine controller to a computer or computer system for investigation and/or analysis. The figure shows a user 1 who carries a small transfer device 2 containing a memory medium. A drive 3 or similar machine controller may be arranged with a unique identification device 4, which may be a number or bar code or machine-readable identity plate or ID marker or RFID tag. The user also has access to a computer 5 or computer system.

During a maintenance inspection or investigation an engineer carries the mobile phone, PDA, tablet PC, handheld terminal, USB memory stick with him. Within the process, when he experiences circumstances or problems with a drive that he wants to explore further, the transfer device either identifies the drive or machine controller automatically, or the engineer selects or identifies the relevant drive manually. Using a wired communication link, the drive is identified automatically when the engineer plugs in the connection. Using a wireless communication link, the engineer may select a specific drive from a list of available drives and other devices (for example, based on automatic recognition of RFID tags), enter the drive's ID /tag number, or select the drive based on a bar code (where the information transfer device comprises a bar code reader, 2-D code reader, or reader of other machine-readable graphics) or an ID marker (where the information transfer device comprises an optical scanner or camera).

In case the handheld information transfer device contains a display (for example, a mobile phone, a palmtop, a palmtop with an integrated mobile phone, a PDA, a tablet PC, a handheld terminal, etc.), the engineer uses this interface for interacting with the drive. Basically, he uses the transfer device like a camera and with a single 'click' takes a 'snapshot' of the status of the drive. This 'snapshot' comprises different parameters such as messages (error, alarms, warnings, etc.), process parameters (speed, rpm - revolutions per minute, number of cycles since last inspection, frequency, current and power), time and date, and parameters specific for the various wizards.

If the information transfer device does not include a display, such as is usually the case with a USB memory stick, the drives HMI front panel may also be arranged with functionality to take a 'picture' of the current situation and further to upload it directly to the transfer device. This is based on a minimum number of selections, commands or -'clicks'. Subsequently or finally, the engineer or other user physically moves to a PC-based system 5 or centralized data storage facility. He connects to the PC system and uploads the 'picture', the data snapshot representing the problem or other circumstances which shall be explored, investigated or analysed in detail with extended capabilities and tools. When uploading this situation to the PC, an application is preferably arranged to start automatically.

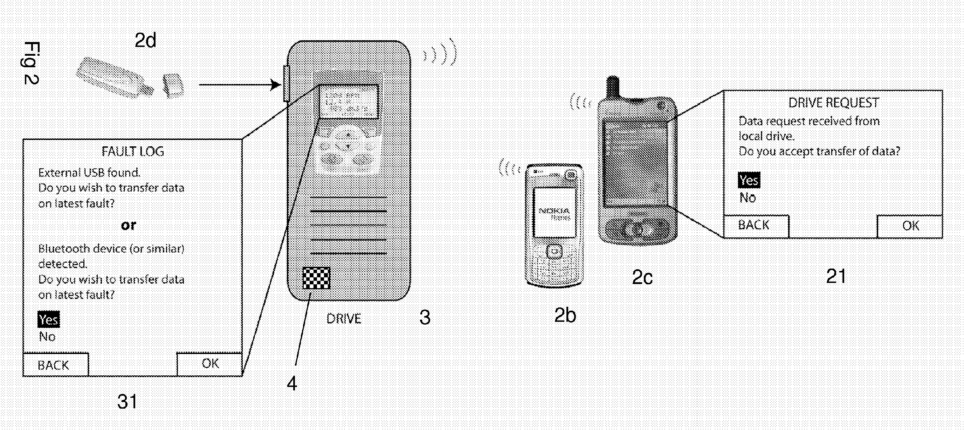

Figure 2 shows the drive 3 or other controller, arranged with an identity 4, which may be a number, badge, bar code, plate, ID marker or other means. The drive 3 is shown displaying an example message 31 on a display of the drive. A memory device, shown here as a USB-type memory stick 2d is shown which may be connected into a USB socket on the drive. Two other transfer devices are shown, a portable phone 2b and a portable computer 2c, palm computer or computer/phone. An exemplary display 21 for the portable computer (or a phone) is shown.

The user 1 places his USB memory stick in the USB slot in the drive. The drive detects the USB and displays a message, asking the user if he wants to transfer data from the drive to the USB memory stick. By simply clicking 'OK' or making another simple selection, data from the drive or machine controller is uploaded to the USB. If the user wishes to upload other data such as errors or fault(s), he may find these in, for example, a Faults' menu of the drive, select the desired event category such as faults, and easily transfer these to the USB memory device.

Wireless transfer may be carried out in a similar way. The drive detects the ID of the information transfer device (mobile phone, PDA, tablet PC, handheld terminal, etc.). If the ID matches any of the IDs in a "permissions list" (predefined in the drive), the following process may then proceed:
- an information request is sent from the device to the drive.
- the drive receives the request and sends the requested information back to the device. From the transfer device, the user has access to all available faults, errors, events etc. which may be transferred for further exploration. The user selects the desired faults, errors, etc. and uploads information about these to the device.

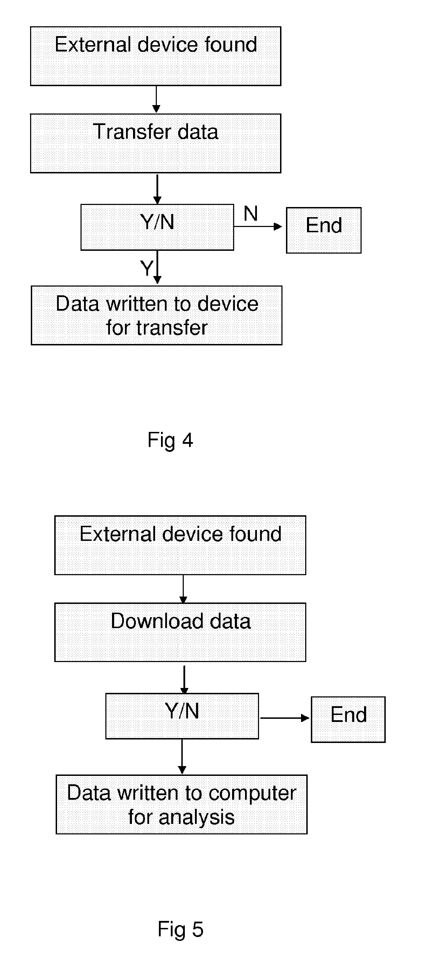

Figure 4 shows a flowchart for a method of downloading information to a transfer device. Thus at the drive, or controller of a machine, the following steps may take place, after a device, a transfer device, is connected to the drive front panel or suitable connection point, wherein the display offers the following prompts:
1. external device found
2. transfer data Y/N
   The user then inputs yes for transfer or no to cancel.
   Alternatively wireless transfer device moving into wireless range may result in the following display
3. wireless device detected
4. transfer data Y/N

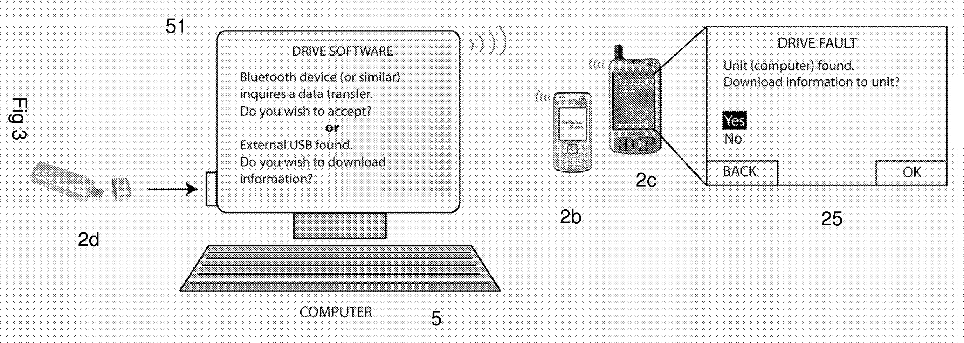

Figure 3 shows the data uploading from the transfer device 2 to the computer system 5. The figure shows a computer 5 which is preferably connected to a data network and to the internet. The computer has connection interfaces for data input, such as a USB socket. The computer may also be equipped for wireless communication. The computer 5 may have an application or an interface that displays a display such as display 51 when a connection to a data transfer device, or a wireless communication offering a data transfer or seeking a data transfer service has been detected. The transfer device such as a mobile phone 2b or portable computing device 2c may be arranged for hard wire or wireless communication. The phone or the portable computing device may show a display such as display 21 on detecting a computer 5.

The information transfer device 2b, 2c (mobile phone, PDA, etc.) detects the computer ID via eg Bluetooth signals. If the ID matches any of the IDs in a "permission's list" (predefined in the device), the following process may proceed: the user chooses to send selected data from the device to the computer. This generates an information transfer inquiry on the computer, which the user has to accept before the data is downloaded to the computer. The user can accept by clicking 'OK' or similar. On acceptance, the data is transferred from the device to the computer. A software tool installed on the computer is able to read and interpret the downloaded data. The information on the fault, error, drive state or similar is presented the user on the computer screen.

Figure 4 shows a flowchart for a method of uploading information to a computer or workstation. Thus a corresponding procedure takes place at the PC, where a take place, after a device, a transfer device, is connected to the drive front panel, USB socket or suitable connection point, wherein the display offers the following prompts:
1. external device found
2. transfer data Y/N
   The user then inputs yes for transfer or no to cancel.
   Depending on the implementation and complexity required, the display may additionally or instead signal to the user:
6. external USB device found
8. download information Y/N
   or
6. external USB device found
7. device name Operator Bill
8. download information Y/N

Similarly at the workstation or PC a wireless transfer device moving into wireless range may result in the following display
9. wireless device detected
   or
9. Bluetooth device detected
10. download information Y/N
An application such as a data server or a web server may be arranged or embedded in a drive (or machine controller) and/or in the transfer device. The data server or web server is arranged to produce a prompt on the drive display as described above and in flowcharts of Figure 4, similar to Figure 5, prompting a user if a data transfer is to be made.

Similarly a transfer device, even a USB-type memory stick or other memory storage device without a display and/or without processor means, may still be arranged with an application which, when read by the connecting device, may cause a data server or other function be executed to prompt for a data transfer on the device it is connected to (drive, computer) that has a display.

The invention comprises a method and a system for uploading information including a description of the current situation consisting of a number of (pre-) selected parameters from a local drive 3 to a centralized PC 5. The system comprises means for capturing a 'snapshot', or a description, of the current situation of the drive, or similar device. This may be a portable or handheld device with information transfer capability such as a mobile phone, a palmtop, a palmtop with integrated mobile phone, a PDA, a tablet PC, a handheld terminal, a USB memory stick, etc. for transferring information from the local device 3 (a motor drive, a controller, a starter, a softstarter, etc.) to a workstation or centralized PC-based system 5 comprising:
- a communication link between the (handheld) information transfer device and the drive such as for example, BlueTooth, IrD, WAP, a wired USB connection, a firewire connection;
- a communication link between the (handheld) information transfer device and the PC-based system such as for example, BlueTooth, IrD, Wap, a wired USB connection, a firewire connection;
- an interface for capturing a 'snapshot' or 'picture' of the current situation, selecting one or more 'snapshots' and uploading it to the transfer medium. Such an interface can either be a part of the drive, and include eg display 31, or a part of the handheld information transfer device if this device comprises an interactive interface and include eg display 21. The system can be configured in different ways.

A PC-based system 5 for further information exploration possibilities comprising one or more of an internet connection, a connection to server that allows to access to stored information and databases, applications such as Diagnostic Tools, application-specific information such as electronic manuals, maintenance reports, historical data.

One or more unique IDs such as an identity means 4 on drive 3 may be used for identifying and recognising the drives and similar devices within the process environment, for example by means of a recognition system for recognizing the unique IDs. Such IDs may be implemented in software in form of a tag number or be hardware IDs such as RFID tags.

This invention describes a number of different methods and systems for transferring information from locally to a centralized computer within a short range and a long range, with an interface for interaction at the transfer device or using the drive's HMI front panel.

Uploading information using a mobile phone within a short range - the user uses his mobile phone to take a 'snapshot' of the current situation or state of the parameters. The mobile phone and the drive communicate using, for example, BlueTooth, IrD, WAP, a wired USB connection, or similar technical solutions. The mobile phone usually requires to have an application installed to be able to communicate with the drive, although a thin client such as a pre-configured internet web-browser may also be used. The user simply selects to upload current state of the drive or select a condition/situation from a list, brings the mobile phone to the centralized PC with network connection where he selects to upload the drive 'snapshot' to the PC. The communication between the mobile phone and the PC takes place by using BlueTooth, IrD, USB (using a cable/wire) or other similar communication solutions.

An icon appears at the PC which opens the PC application including the uploaded information from the drive. The user can start to explore the drive status and parameters.

Uploading information using a USB stick within a short range - an alternative to the mobile phone, is to use a USB stick (or a memory stick). The drive or similar machine controller needs to have a USB socket installed. The user places the USB stick in the USB socket, for example at the drive HMI front panel. He will automatically get the choice to take a 'snapshot' of the current situation. Alternatively, the user may select the situation from a list that appears at the drive HMI front panel. When current snapshot is selected, it is stored on the USB stick and it can be removed. The user brings the USB stick to the centralized PC and plugs it into the USB socket at the PC.

Uploading information using a PDA within a short range - another alternative for transferring information from the drive HMI front panel to the PC is to use a PDA, or a portable palmtop or other computing device or a similar handheld device. It may even be a universal handheld device developed specifically for communicating and interacting with the drives and other similar process equipment. The communication between the handheld PDA and the drive is based on BlueTooth, IrD, Wap, a wired USB connection, or similar technical solutions. At the PC, the user selects to upload the drive 'snapshot' to the PC. The communication between the PDA and the PC takes place by using BlueTooth, IrD, USB (using a cable/wire) or other similar communication solutions.

Uploading information using a mobile phone within a long range - with
a mobile phone, or a similar information transfer device, the engineer can simply phone the motor drive, or similar device, and upload the situation description over the phone line. Such a solution will require that the drive or a control system or a data network that the drive is connected to is arranged to support a secure dial-up data connection.

Interactive interface for a handheld transfer device comprising a display - a handheld information transfer device including a display may contain the interface for interacting with the drive. Initially, the interface provides a 'one-click' information upload from the local drive to the centralized PC. The handheld information transfer device automatically identifies the closest located drive, or similar device, within the process. Alternatively, using a bar code reader integrated in the transfer device allows the user to easily select the actual drive.

Using a wired communication link, the identification also takes place automatically. When a specific drive is identified or selected, the user uses the transfer device like a camera and takes a 'picture' of the current situation of the drive. Such a 'picture', or 'snapshot', represents a description of the situation including, for example, an error code, other messages, status information such as rpm (revolutions per minute) / frequency, speed, current and power, time, date, set of parameters for a wizard, etc. Alternatively, this interface will allow the user to select a specific drive, for example, from a list of potential drives which are reachable, by entering the drive ID (tag number) directly, or to confirm that the drive which is within reach or which is recognized is the right one. Further, from this interface the user captures the state of the current situation / takes a 'picture', or a 'snapshot', of the current situation as described above. Finally, the user can decide when to upload a situation from the handheld information transfer device to a PC-based system. If the transfer device contains more than one situation description, the user may be able to select which one, or more, to upload.

Methods of the invention may be supervised, controlled or carried out by one or more computer programs. One or more microprocessors (or processors or computers) comprise a central processing unit CPU connected to or comprised in one or more of the above described drives or machine controllers, which processors or computers perform the steps of the methods according to one or more aspects of the invention, as described above and also with reference to Figures 4, 5. It is to be understood that the computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations, synchronisations and the like for the methods previously described, and for example in relation to the flowcharts of Figures 4, 5. A part of the program may be stored in a processor as above, but also in a ROM, RAM, PROM, EPROM or EEPROM chip or similar memory means. The or some of the programs in part or in whole may also be stored locally (or centrally) on, or in, a memory storage device of a control system, and/or on suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media, a USB memory stick and other removable flash memories, hard drives etc. may also be used. The program may also in part be supplied or updated from a data network, including a public network such as the Internet.

It should be noted that while the above describes exemplifying embodiments of the invention, there are several variations and modifications which may be made to the disclosed solution without departing from the scope of the present invention as defined in the appended claims.

## Claims

1. A method for investigation of a condition of a drive or machine controller wherein operating data of said drive or machine controller is examined and a computer-implemented process or calculation carried out to determine said condition, **characterised by**
- identifying one said drive or machine controller of a plurality of drives or machine controllers,
- accessing and retrieving operating data from said drive or machine controller by means of a portable device comprising a memory storage device,
- uploading the retrieved operating data to a computer or computer network from the portable device,
- retrieving, by means of the computer or computer network, stored data for the identified said drive or machine controller and
- determining the said condition of said drive or machine controller.

2. A method according to claim 1, further comprising retrieving operating data from the identified said drive or machine controller from a current operation or latest data update.

3. A method according to claim 1, further comprising providing both the operating data and stored data to at least one operator or other user.

4. A method according to claim 1, further comprising retrieving stored data for the identified said control device comprising technical specifications or historical operating data.

5. A method according to claim 1, further comprising retrieving stored data for a process section including the, or connected to the identified said drive or machine controller.

6. A method according to claim 1, further comprising calculating an estimated or modeled said condition based on the retrieved operating data or a combination of the retrieved operating data and the stored data.

7. A method according to claim 1, further comprising matching the retrieved operating data to a said condition comprised in the stored data.

8. A method according to claim 1, further comprising identifying the said drive or machine controller by means of an identity sign or device comprising any from the group of: tag, RFID tag, a known position or location, machine-readable code, bar-code.

9. A method according to claim 8, further comprising matching the identity sign or device to one drive or machine controller of many drives and/or machine controllers stored in a list or table.

10. A method according to claim 1, further comprising transferring operating data from said drive or machine controller by means of a plug-in contactor wire connection.

11. A method according to claim 1, further comprising transferring operating data from said drive or machine controller by means of a wireless connection.

12. A method according to claim 1, further comprising identifying the drive by means of a known position in the installation or a location found by a satellite positioning system or by a wireless telephone network system.

13. A method according to claim 1, further comprising the drive detecting the presence of the transfer medium and signaling an option to download.

14. A method according to claim 1 or 14, further comprising the drive identifying the transfer medium and transferring operating data by means of a wire connection.

15. A method according to claim 1 or 14, further comprising the drive identifying the transfer medium and transferring operating data by means of a wire connection.

16. A method according to claim 1, further comprising detecting by means of an application of the drive a connection of a transfer device to the drive and generating a prompt to transfer operating data.

17. A method according to claim 1, further comprising identifying by means of an application of the drive a request to transfer operating data by means of a wired or wireless connection.

18. A system for investigation of a condition of a drive or machine controller wherein operating data of said drive or controlled machine is examined and computer implemented processes or calculations carried out to determine said condition, **characterised by**
- an identity device or identity sign for identifying said drive or machine controller comprising any from the group of: tag, RFID tag, a known position or location, machine-readable code, bar-code,
- a portable device with memory storage means (2d) memory stick, Bluetooth phone (2b), PDA (2c), portable device with memory and camera (eg mobile phone), Tablet PC, handheld terminal) for accessing and retrieving data from said control device, and computer (5) or computer network means for retrieving by stored data for the identified said control device and providing the operating data and stored data to at least one operator or other user.

19. A system according to claim 18, further a plurality of identity signs or devices comprising any from the group of: tag, RFID tag, a list or table of stored known positions or locations, machine-readable code signs, bar-code signs.

20. A system according to claim 18 or 19, further comprising matching the identity sign or device to one drive or machine controller of many drives and/or machine controllers stored in a list or table.

21. A system according to claim 18, further comprising transferring operating data from said drive or machine controller by means of a plug-in contactor wire connection.

22. A system according to claim 18, further comprising transferring operating data from said drive or machine controller by means of a wireless connection.

23. A system according to claim 18, further comprising an application or data server running in the drive configured for detecting the presence of the transfer medium and signaling an option to download.

24. system according to claim 18, further comprising an application or data server running in the drive for identifying the transfer medium and transferring operating data by means of a wire connection.

25. A method according to claim 18 or 14, further comprising an application or data server running in the drive for identifying the transfer medium and transferring operating data by means of a wireless connection.

26. A method according to claim 18, further comprising an application or data server running in the drive for detection of a connection of a transfer device to the drive and generating a prompt request for transferring operating data.

27. A method according to claim 1, comprising an application or data server running in the drive for identifying a request to transfer operating data by means of a wired or wireless connection.
